(19) Europäisches Patentamt
European Patent Office
Office européen des brevets

(11) Publication number : 0 574 259 A2

# (12) EUROPEAN PATENT APPLICATION

(21) Application number : **93304516.3**

(51) Int. Cl.$^5$ : **C09K 3/14**

(22) Date of filing : **10.06.93**

(30) Priority : **12.06.92 US 898116**
**03.11.92 US 971006**

(43) Date of publication of application :
**15.12.93 Bulletin 93/50**

(84) Designated Contracting States :
**NL SE**

(71) Applicant : **ENGELHARD CORPORATION**
**101 Wood Avenue**
**Iselin, New Jersey 08830-0770 (US)**

(72) Inventor : **Wu, Joseph H.Z.**
**43 Canterbury Circle**
**Somerset, New Jersey 08873 (US)**

(74) Representative : **Geering, Keith Edwin**
**REDDIE & GROSE 16 Theobalds Road**
**London WC1X 8PL (GB)**

(54) **Use of surfactants in processing abrasive pigments.**

(57) A simple inexpensive means to decrease the abrasivity of abrasive pigments such as calcined kaolin and titania in which a trace of nonionic and/or anionic surfactant is incorporated with abrasive pigment prior to or during the preparation of an aqueous pigment slurry or with dry pigment.

EP 0 574 259 A2

This invention relates to reducing the abrasivity of pigments such as calcined clay and titanium oxide used by the paper industry.

Calcined kaolin and titania pigments have long been used in applications such as paper coating and filling, paints and plastics for their desirable properties - brightness, opacity and hiding power. Kaolin pigment for paper coating and filling have been almost exclusively ultrafine fully calcined kaolin (e.g. ANSILEX 93® by Engelhard Corporation - see U.S. 3,586,523), which is abrasive compared to noncalcined (hydrous kaolin) or partially calcined (metakaolin) pigment. Increased abrasivity gives increased wear of bronze web forming screens (wires) on paper making machines, dulling of paper slitter knives, and wear of printing plates and other surfaces which contact the pigment. Titania pigment is generally more abrasive than fully calcined kaolin.

Paper makers increasingly demand lower abrasion. Suitable kaolin can be calcined to metakaolin at temperatures below those for fully calcined pigment, but metakaolin is always less bright (generally by 2-3%) than fully calcined pigment from the same calciner feed. Even metakaolin pigments may be more abrasive than paper makers desire. Many patents on kaolin calcination to provide pigment refer to reduced abrasivity but achieve this by kaolin crude selection and/or processing conditions prior to calcination.

Originally kaolin pigments were supplied dry but demand for pigment slurry has developed. Pigment slurries should be as concentrated as feasible, consistent with their being sufficiently fluid to be pumped yet resistant to settling; 70% solids content is no problem for hydrous kaolin, but with fully calcined kaolin requirements for satisfactory rheology and settling resistance limit the maximum solids so that 50% solids slurries have been difficult to achieve.

Hydrous kaolin has been mixed with fully calcined kaolin to reduce overall abrasivity, but this impairs pigment properties and large amounts of dispersant are needed to give high solids slurries.

The kaolin industry has spent years seeking good pigments of lower abrasion and significant effort in producing stable concentrated slurries of calcined kaolin pigments. Various surfactants or dispersants have been proposed for stable slurries, but no efforts to reduce abrasion have added surfactant to calcined kaolin and no research and development addressing slurry stability focused on abrasion. The problems of pigment abrasion and rheology are unrelated, but improvement in abrasion that is adverse to the provision of a stable, nonsettling slurry is not commercially viable.

The present invention arose from the appreciation that addition of certain surfactants in very small amounts would reduce the abrasion of pigments such as calcined kaolin by reducing friction with wires and cutting blades used in paper making.

The present invention provides a simple inexpensive means to decrease the abrasivity of pigments such as calcined kaolin and titania, by incorporating a trace of nonionic and/or anionic surfactant, e.g. the surfactant - is added prior to or during preparation of aqueous pigment slurry, or a solution of the surfactant can be added to dry pigment. Surfactants used in this invention can be known pigment dispersants although when used in practice of the invention they do not fully disperse pigments; they are not detrimental to slurry stability and end-use performance of paper products.

Among nonionic surfactants are octylphenoxy polyethoxyethanols which include condensates of ethylene oxide with octylphenol and can be represented by formula

$$H_{17}C_8 - C_6H_4 - 0(CH_2CH_20)_nH$$

or

$$(CH_3)_3CCH_2 - \overset{\displaystyle CH_3}{\underset{\displaystyle CH_3}{C}} - C_6H_4 - (CH_2CH_20)_nOH$$

in which n is 5 to 15, preferably 9 or 10; specific examples are supplied under trademarks Conco NIX-100, Igepal CA-630, Neutronyx 605 and Triton X-100, X-114, and X-45.

Other recommended nonionic surfactants are polyethyleneglycolmono (nonylphenyl) ethers, e.g. the nonylphenoxypoly (ethyleneoxy) ethanol compounds

$$H_{19}C_9 - C_6H_4 - (OCH_2CH_2)_nOH$$

where n can be over 12, e.g. over 20; specific examples are supplied under trademarks Conco NI, Dowfax 9N, Igepal CO, Makon, Neutronyx 600's, Nonipol NO, Polytergent B, Renex 600's, Solar NP, Sterox, Surfonic N, T-DET-N, Tergitol NP, and Triton N-42, N-57, N-60, N-101 and N-111. Others are the polyethylenepolypropylene glycols

$$HO(CH_2CH_20)_a(CH(CH_3)CH_2OH)_b(CH_2CH_20)_cH$$

where b is at least 15 and $(CH_2CH_20)_{a+c}$ is 20-90 wt.%; specific examples are available under trademarks Poloxamer 188, Exocorpol and Pluronic F68. Yet others are polyoxyethylene alcohols $R(OCH_2CH_2)_n0H$ where R is a long chain alkyl group or mixture of alkyl groups, preparable by ethoxylation of fatty alcohols; specific examples are Alfonics 1012-40, 1216-22, 1216-30, 1412-40, 1412-60 and 610-50R, BioSoft EA, Brij, Dehydol, Emulphogene BC, Ethosperse, Emulgin C, Ethyoxyol, Lipal (CA, CSA, LA, MA, OA, TD), Lipocol, Macol, Polychol, Poly-Tergent J, Siponic (E, L, Y), Tergitol (L, S) Trycol and Volpo. Further recommended nonionic surfactants are polyethylene oxide fatty acid esters

$$R(0CH_2CH_2)_nH$$

or

$$RCOO(CH_2CH_20)_n0CR$$

where R is a long chain alkyl group or mixture of alkyl groups, preparable by esterification of fatty acid with ethylene oxide or polyethylene glycol; it is preferable to have 12 to 15 or more ethylene oxide units; specific examples are Polyoxyl 40 stearate, Emerest 2672, Lipal 39S, Mapeg S40, Myrj 52 and 52S and Pegosperse 1750-MS. Also recommended are alkylaryl polyoxyethylene glycols (e.g. Triton X-114SB) and alkylaryl polyether alcohols (e.g.Triton X-120 and X-155).

Anionic surfactants are well known. Non-limiting examples are lignin sulfonates and naphthalene sulfonate formaldehyde complexes. Sodium polyacrylate, a widely - used pigment dispersant, is not a surfactant. When added to water, it does not significantly reduce surface tension. At 0.1 wt%, the surface tension of C211 solution reduces only o.8%, while that of Triton X-100 solution reduces 58%.

Undesirable foaming may occur on vigorous stirring or blending of a system containing surfactants such as Triton X-100 that are eminently effective in reducing abrasion. This can occur when the surfactant is added or subsequently - for example when a vessel for the pigment slurry is cleaned by a pressurized stream of water.

To avoid or minimize foaming during pigment preparation, handling or use, some preferred embodiments this invention use, as or in the abrasion-reducing surfactant, a trace of nonfoaming or defoaming nonionic surfactant. Surfactants in this practice of the invention are the polyoxyethylated acetylenic glycols

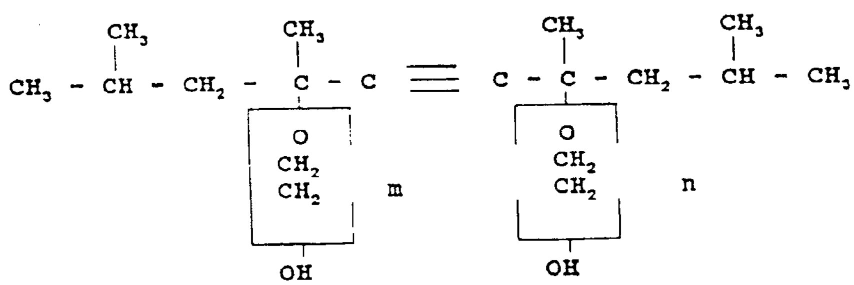

wherein m + n, the number of moles of ethylene oxide, is 1.3 to 30, e.g. 1.3 to 3.5.

The term "nonfoaming" used herein refers to surfactant which does not foam in an aqueous system under normal conditions; "defoamer" refers to a substance used to reduce foaming due to proteins, gases or nitrogenous materials which may interfere with processing.

Suitable surfactants for combatting foaming in this invention include commercially available SURFYNOL®400 series surfactants. Presently preferred are surfactants in which n + m is 1.3 to 3.5 (e.g.SURFYNOL®420 and SURFYNOL®440 surfactants).

The following are published properties of Surfynol surfactants:

| | Surfynol 420 | Surfynol 440 | Surfynol 465 | Surfynol 485 |
|---|---|---|---|---|
| Ethylene Oxide Content | | | | |
| Moles | 1.3 | 3.5 | 10 | 30 |
| Percent by Weight | 20 | 40 | 65 | 85 |
| Specific Gravity @ 25°C | 0.943 | 0.982 | 1.038 | 1.080 |
| APHA Color | 350 | 350 | 350 | 350 |
| pH (1% aqueous solution) | 6-8 | 6-8 | 6-8 | 6-8 |
| Viscosity @ 20°C, cps | <250 | <200 | <200 | <350 |
| Pour Point (ASTM D97) | -13°F | -55°F | 44°F | 85°F |
| Cloud Point (5% solution) | -- | -- | 63°C | >100°C |
| HLB (Hydrophile-Lipophile Balance) | 4 | 8 | 13 | 17 |

SURFYNOL®440 is produced by reacting ethylene oxide with Surfynol 104 - a white, waxy solid, 2,4,7,9-tetramethyl-5-decyne-4, 7 diol. Surfynol 104 is a nonionic molecule with a hydrophilic section in the middle of two symmetric hydrophobic groups, and has benefits including wetting and foam control in aqueous systems. Adding ethylene oxide to Surfynol 104 increases its hydrophilic nature, modifying its water solubility, wetting and defoaming characteristics. SURFYNOL® 440 is a nonfoaming/defoaming nonionic surfactant; it complies with FDA regulations 21 CFR 176.170 and 176.180 and can eliminate fisheyes, pinholes and other surface defects in coatings by improving flow while combatting foam.

All surfactants of the Surfynol series can be used to lower pigment abrasion. When the number of moles of ethylene oxide is above 3.5 (Surfynol 465), the foaming tendency may undesirably increase; when it decreases, as in Surfynol 420 (which has an HLB of 4 compared to 8 for SURFYNOL®440), the foaming tendency decreases and the surfactant may function as a defoamer and further improve slurry properties. However, a larger dosage of Surfynol 420 may be needed for abrasion reduction because of its smaller content of ethylene oxide.

The amount of surfactant depends upon absorption on the pigment surface, reaction with other slurry ingredients, and foaming tendency in the case of nonionic surfactant. The total amount of surfactant may for example be from 0.002% to 1.0% (based on dry pigment) preferably 0.02% to 0.5%, most preferably 0.05% to 0.2%. With excess surfactant, abrasion reduction may not be as efficient and/or there may be undue foaming; when insufficient is employed, abrasion may not be reduced significantly.

Mixers with high shear blades, such as a Cowles system, are suitable for making down high solids calcined kaolin slurries. At the beginning of makedown, e.g. when half of the clay has been added, the solids content is low and makedown is easy, even if no surfactant or dispersant is present. It is preferable to add surfactant after about 1/2 of the clay has been added and before the slurry (with full amount of clay) is subjected to high shear work; there is then less tendency to foam and higher efficiency. Foam may be generated if water with Triton X-100 is subjected to high shear work without clay in it, though an appropriate dosage of nonfoaming surfactant such as Surfynol 440 could be added to water before addition of clay (foaming should not occur using this surfactant).

It is important to have high shear rate; with low shear rate the slurry viscosity may remain poor.

Slurries of the invention may have pH values of about 4 to 10, usually 5 to 8. In addition to pigment, water and surfactant, materials conventionally used in pigment slurry preparation may be present - e.g. biocides, colloidal thickening agents, CMC and other dispersants (suitably up to about 0.2 wt.% of acrylate pigment dispersant).

To decrease foaming, one could use nonfoaming surfactant or defoamer plus foaming surfactant, e.g TRITON X-100; nonfoaming (e.g. SURFYNOL®440) surfactant used alone has advantage due to simpler processing.

Pigments which may especially benefit by addition of surfactant include fully calcined kaolin (preferably of average size about 0.6 - 0.8 microns), metakaolin and titanium dioxide, used alone or in admixture. Other abrasive pigments which may be improved include bentonite, ground carbonate minerals such as calcite or other forms of calcium carbonate and spinels. Generally, pigments amenable to the treatment have Einlehner abrasion values above 10.

The surfactant can be mixed with the abrasive pigment during slurry makedown, producing slurries containing, for example, from 10% to about 60% solids. Instead a solution of the surfactant can be added to dry pigment, with drying optional.

In the Einlehner Abrasion test, the weight loss of a wire disc contacted by a rotary abrader and test material is used as a relative measure of the abrasiveness of the test material. Procedures and equipment used to obtain values reported herein are:

Materials and Apparatus

1. Einlehner AT1000
2. Phosphor Bronze P.M. Wire Discs
3. Ultrasonic Bath
4. Vacuum desiccator
5. Tallboy Mixer
6. Laboratory equipment such as: oven, balance (analytical and top loading), glassware, pH meter.
7. Reagents
    a. 5 wt.% Sodium Pyrophosphate Solution (TSPP)
    b. Deionized (DI) Water
    c. Isopropyl Alcohol
    d. 1:1 NaOH

Sample Preparation

1. Weigh 150 g. of sample. Measure 850 ml of DI water, pour 75% into a 1 liter stainless steel beaker and add the weighed sample. Save the remaining DI water to flush the slurry when it is poured into the test cylinder.
2. Adjust pH of slurry to 7.0 using 5% TSPP solution or 1:1 solution of HCl.
3. Mix slurry 10 mins. on Tallboy mixer.

Sample Evaluation

1. Prepare test screens by placing several screens into a 250 beaker of microdetergent and DI water. Place beaker in ultrasonic bath for 5 mins.
2. Remove screen, wash with DI water, dry with isopropanol and then in oven at 105°C for 15 mins. Place screen in desiccator.
3. Weigh screen and place, with marked (blue) side facing floor of test cylinder, and assemble unit.
4. Place rotary abrader on tip of rotating shaft; ensure abrader is in proper start position.
5. Pour slurry into test cylinder and use saved DI water to flush remaining slurry from beaker.
6. Choose appropriate instrument setting (cycle time), usually to give 10-40 mg. weight loss - e.g. setting 3 (43.5 x $10^3$ revs) for calcined kaolin; lower agitator shaft and switch on.
7. Test finishes when the prescribed revs. are completed. The instrument stops automatically.
8. Raise agitator shaft, remove cylinder and screen.
9. Wash screen with DI water, put in microsolution in sonic bath for 5 mins. and rinse with isopropanol.
10. Dry screen in oven at 105°C for 15 mins. and cool in desiccator.
11. Weigh screen to nearest 0.1 mg.
12. Report results according to calculation.

Calculation:

$$\frac{100{,}000}{\text{No. de revolutions}} \times \text{mg.wt. loss} = \text{abrasion (mg/100,000 rev.)}$$

Test Precision

The precision of the Einlehner method is based on data generated from four of our facilities. The sample run at all facilities was ANSILEX®93/50% solids slurry, at Setting 3. The data are as follows:

| Laboratory | No.1 | No.2 | No.3 | No.4 |
|---|---|---|---|---|
| Av. | 17.5 | 16.7 | 16.3 | 16.6 |
| 95% Confi. | 3.1 | 3.1 | 2.8 | 3.4 |

FOAMING TEST

Foaming tendency was assessed qualitatively by observing foaming in making down slurries.

**EXAMPLES**

In the Examples, given for illustration only, surfactant proportions are based on dry clay, which is fully calcined kaolin (Ansilex 93) pigment powder unless otherwise specified. The surfactants in Examples 1 to 7 are PETRONATE HL® - Sodium didodecylbenzene sulfonate (Sodium Petroleum Sulfonate), supplied by Witco Chemical Corporation - 62% active; TRITON® X-100 - Octylphenoxy polyethoxy ethanol (an alkylphenol-hydroxyethylene), supplied by Union Carbide Corporation - 97% active; and TYZOR® DEA - Alkynolamine complex (chelate) of titanium (organic titanate), nonionic type (although the titanate is hydrolyzed in the reaction with clay), supplied by DuPont Company, 40-45% active; this type of material becomes anionic as a result of hydrolysis.

**EXAMPLE 1**.

A commercial 50 wt% slurry of Ansilex 93 had a pH of 7 and had been prepared by mixing in a three-stage Cowles mixer. The slurry had been prepared from dry Ansilex®93 powder and water with thickener (CMC) and dispersant C211 (sodium polyacrylate), added continuously in the first stage. The second stage sheared with high speed (approx. 1000 rpm) . The third stage played a role partially as a high shearing tank and partially as a trimming-down tank.

**Anionic surfactant (Sodium didodecylbenzene sulfonate)**

Petronate HL sulfonate (61-63%) was added to samples of the Ansilex®93 slurry at levels from 0.02% to 0.20 wt%, while they were stirred mildly with an air-driven paddle mixer for 3 mins. For each treatment, Einlehner abrasion testing was performed once or twice. The Einlehner of the control (no treatment) was repeated 4 times because the data of the control sample is the most important reference. The Einlehner results at different levels of surfactant are a check on each other, but this advantage is not available in control data (only one level: zero). Such data provide a base if statistical analysis is desired; one can classify all surfactant treated samples as one group having a degree of freedom df=4, while the control group has df=3. Such experimental design provides high efficiency in using raw data.

**Nonionic surfactant (Octylphenoxypolyethyoxyethanol)**

Triton X-100 was added to other samples of the Ansilex®93 slurry at levels from 0.05 wt% to 0.20 wt% while they were stirred mildly for 3 mins. Abrasion test results are in Table 1.

TABLE 1

| Controls | wt% Petronate HL | | | | wt% Triton X-100 | | |
|---|---|---|---|---|---|---|---|
| | 0.02 | .075 | 0.10 | 0.20 | 0.05 | 0.10 | 0.20 |
| | Einlehner Abrasion, mg | | | | | | |
| 20,21,20 21 | 13 | 8 | 13,13 | 11 | 17 | 18 | 14 |

Petronate HL was effective at all levels of use and Triton X-100 was most effective at 0.20 wt%.

**EXAMPLE 2**

In a control test (no surfactant) dry ANSILEX®93 pigment was added gradually to water in a beaker while the system was mixed. The ion content of the water was $Ca^{++}$ <0.01 ppm; $Na^{+}$ <0.01 ppm; total NaCl equivalent <2ppm; pH 6.5. A 62 wt% slurry was made when all dry pigment was added. Dry clay was added in increments over 25 mins, while a Cowles mixer was at low shearing speed (1 inch diameter blade at 2800 rpm). High speed shearing at 12,000 rpm was applied for 10 mins. The slurry was then diluted with water of the above purity to 60 wt% solids and pH 5.5. The procedure was repeated with three different surfactants added to the water to which the pigment was added.

Based on this and other experimental work using various amounts of surfactants, it was concluded that most suitable amounts of surfactants are: Petronate from 0.02 to 0.3 wt.%; Triton X-100 from 0.02 to 0.3 wt.%; and Tyzor DEA from 0.02 to 0.1 wt.%. Above the maximum level specified, further reduction in abrasion would not be detected. Below the minimum, reduction in abrasion is small.

**EXAMPLE 3**

The slurry was prepared using a Dispersator (as in Examples below, model No.89, Premier Mill Corp., with a 1" blade). Triton X-100 at 0.1 wt% was added to 577 g. of water ($Na^{+}$ <0.02ppm , $Ca^{++}$ <0.02ppm) ; 625 g. of Ansilex®93 powder was added gradually to the beaker while the system was mixed at 2,800 rpm. A solids content of 52 wt% was reached when all dry pigment was added. The Dispersator speed was increased to 8000 rpm for 2 minutes. The slurry, diluted to 50 wt% solids, had an Einlehner abrasion loss of 11 mg.

For comparison with commercial product, a slurry was made with a conventional procedure and composition, using the same Dispersator. The standard 50 wt.% solids slurry was made precisely as for Example 3 except that it had no Triton X but contained 0.15% C211, 0.05% CMC thickener and 0.09% microbiocide AMA415 (active ingredients: 1.15% 5-chloro-2-methyl-4-isothiazolin-3-one and 0.35% 2-methyl-4-isothiazolin-3-one) from Vining Industries, all of these chemicals being added to the water before the Ansilex 93 pigment; the final 50 wt% slurry showed an average Einlehner abrasion loss of 19 mg.

**EXAMPLE 4**

A 60 wt% solids calcined kaolin slurry was prepared with 0.2 wt% Triton X-100 and used for paper coating tests. The slurry was prepared in the laboratory using the Dispersator. Microbiocide AMA415 at 0.09wt%, based on dry clay, was added to 581 g. of water. Triton X-100 at 0.1 wt% was added to reduce abrasion and help the slurry makedown; 949 g of Ansilex-93 powder was added gradually to the beaker while the system was mixed at 2800 rpm; 62 wt% solids was reached when all dry pigment was added. The Dispersator speed was increased to 12,000 rpm for 10 minutes. The slurry was diluted to 60 wt% for test. The Einlehner abrasion was reduced (from 18-22 mg. to 11 mg.) and the paper coating performance was equivalent to that of normal calcined product.

**EXAMPLE 5**

Ti-Pure R-101 from E.I. DuPont is a high purity rutile titanium dioxide; its average particle size is about 0.2 microns. Triton X-100 (1.2 g) was added to a beaker containing 416.7 g of water ($Na^{+}$ <0.02ppm, $Ca^{++}$ <O.Olppm) ;

625 g. of Ti-Pure R-101 was added to the beaker while the Dispersator was used to stir the system at 2800 rpm. When all titania was added and uniformly mixed, the slurry was tested by the Einlehner procedure. The control sample was made in the same way, except that no surfactant was added. The average Einlehner abrasion loss of the control was 31 mg; that of the Triton X-100 treated sample was 12.3 mg.

## EXAMPLE 6

A metakaolin pigment commercially available under trademark Spectrafil LA was used. Slurries of 30 wt% solids were made with and without Triton X-100. For each batch, 625 g of dry pigment and 1458 g of water ($Na^+$ <0.02ppm and $Ca^{++}$ <O.Olppm) were mixed in the Dispersator. The average Einlehner abrasion of the Triton X-100 slurry was reduced to 6.25 mg. from 8 mg for the untreated sample.

Slurries were prepared as above except that 0.3 wt% TSPP was added to all samples. The average Einlehner loss of the Triton X-100 samples was reduced to 9.33 mg from 12.2 mg (control).

## EXAMPLE 7

A Kitchen Aid Mixer, model K5SS, from Kitchen Aid, Inc. was used to blend dry Ansilex-93 powder with surfactant solution. A 6.7% Triton X-100 solution was made by adding Triton X-100 to water ($Na^+$ <0.02ppm, $Ca^{++}$ <O.Olppm) with hand stirring. The surfactant solution was sprayed onto 175 g. of dry clay by a plastics spray bottle, while the clay was blended in the mixer. In 5 mins. 5.2 g of the surfactant solution was applied. Four batches, 175 g each, were so treated and then mixed together for 30 mins.

The treated samples exhibited an average Einlehner abrasion loss of 12.3 mg., while that of the untreated samples was 16 mg.

## EXAMPLE 8

The Einlehner abrasion of fully calcined kaolin treated by nonionic surfactants of the octylphenol and nonylphenol ethylate types (TRITON X and N series) with different HLBs was evaluated.

The molecules of the TRITON X series used

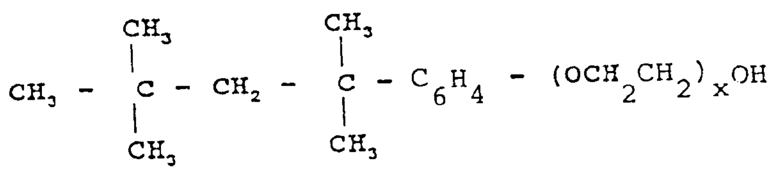

differ only in the number of oxide units - e.g. TRITON X-100 has 9 or 10 units, X-45 has 5, X-305 has 30.

The formula of the TRITON N compounds used is

$C_9C_{19}$ -$C_6H_4$ - $(OCH_2CH_2)_xOH$

In each case 50 wt.% solids slurries were made as in Example 3 using different amounts of the surfactants. Table 2 gives the test results.

TABLE 2

EINLEHNER ABRASION OF CALCINED KAOLIN PIGMENTS TREATED BY TRITON SURFACTANTS

| Surfactant | Moles $Et_2O$ | HLB | Dosage wt.% | Einlr(mg) | Foaming Tend.* |
|---|---|---|---|---|---|
| None (control) | | | | 22.5 | |
| X-45 | 5 | 10.4 | 0.1 | 19.5 | 1 |
| X-114 | 7-8 | 12.4 | 0.2 | 16.8 | 1 to 2 |
| X-100 | 9-10 | 13.5 | 0.1 | 11.0 | 2 |
| X-102 | 12-13 | 14.6 | 0.1 | 18.3 | 2 to 3 |
| X-305 | 30 | 17.3 | 0.1 | 14.5 | 1 |
| | | | 0.2 | 15.3 | |
| N-101 | 9-10 | 13.4 | 0.1 | 15.3 | 2 |
| | | | 0.2 | 13.8 | |

*Foaming tendency was rated qualitatively from 1 (lowest) to 3 (highest).

Table 2 shows that Triton X-100, X-102 and X-45 could be used to reduce abrasion to a similar degree. No simple relationship was found between the HLB values and the Einlehner reduction. The foaming tendency of the Triton X series varied with their HLB. When the HLB increases, the foaming tendency increases. At HLB 14.6(Triton X-102) the foaming tendency peaked, and decreased when HLB further increased to 17.3 (Triton X-305). The foaming tendency of Triton N-101 equalled that of X-100 due to like HLB numbers.

## EXAMPLE 9

Slurries were prepared using Surfynol®440 surfactant using the Dispersator. SURFYNOL®440 at O.1 or 0.2 wt.% was added to 577 g of DI water ($Na^+$ <0.02ppm, $Ca^{++}$<O.Olpm); 625 g of ANSILEX 93 was mixed in at 2,800 rpm; 58 wt% solids was reached when all dry pigment was added. The Dispersator speed was increased to 8000 rpm for 2 minutes.

Foam was not observed in the makedown of the SURFYNOL®440 treated slurries, even under high shear (10,000 rpm). Also, foam was not developed in an aqueous solution (0.2%) vigorously stirred for 10 minutes using the Dispersator. The results in Table 3 show that foam reduction was not achieved by sacrificing abrasion reduction.

**TABLE 3**

| Dosage% | Einlr(mg) |
|---|---|
| 0.1 | 9.5 mg |
| 0.2 | 10.4 mg |
| Control | 16.2 mg |

Any one or more of the following features [i] to [vii] preferably applies in the present invention - the pigment [i] is of Einlehner abrasion loss of at least 10 mg. before treatment, [ii] is free of hydrous kaolin, [iii] is substantially wholly of calcined (preferably fully calcined) kaolin and/or titania; the surfactant [iv] is water-soluble, [v] is wholly nonionic, [vi] amounts to 0.02 to 0.2 or 0.4 (preferably 0.1 to 0.2) wt.% of the dry pigment; [vii] the treated pigment is in the form of an aqueous slurry containing no (or less than 0.5 wt.%) organic colloid thickening agent.

## Claims

1. A pigment composition containing particles of abrasive pigment mixed with surfactant selected from nonionic and anionic surfactants, said surfactant being present in an amount effective to reduce the Einlehner abrasion of said abrasive pigment.

2. A composition according to claim 1 wherein the abrasive pigment is selected from metakaolin, fully calcined kaolin, and titania.

3. A composition according to claim 1 or 2 wherein said surfactant is present in an amount of from 0.002 to 1%, based on the dry weight of pigment.

4. A composition according to any of claims 1 to 3 wherein said surfactant comprises nonionic surfactant of formula:

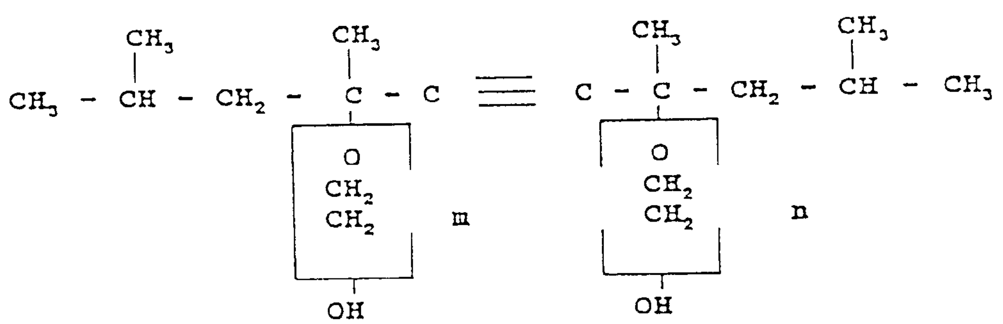

wherein m + n is 1.3 to 30.

5. A composition according to claim 4 wherein m + n is from 1.3 to 3.5.

6. A composition according to any preceding claim wherein said surfactant is wholly nonionic surfactant.

7. A composition according to any preceding claim in the form of an aqueous slurry.

8. A composition according to claim 7 wherein said slurry has one or more of the following features:
[a] it is of fully calcined kaolin with from 0.1 to 0.2wt.% of said surfactant;
[b] it contains fully calcined kaolin of average particle size from 0.6 to 0.8 microns;
[c] it has a pH of 5 to 8.
[d] it contains up to 0.2 wt.% of polyacrylate pigment dispersant.

9. A process for decreasing the Einlehner abrasion of abrasive pigment which comprises incorporating with the pigment surfactant selected from nonionic and anionic surfactant in an amount effective to reduce

the abrasion of said pigment.

**10.** The use of additive selected from anionic and nonionic surfactants to reduce the abrasivity of pigment.